# EUROPEAN PATENT SPECIFICATION

(11) **EP 2 838 734 B1**
(45) Date of publication and mention of the grant of the patent: **28.11.2018**
(21) Application number: 13778130.8
(22) Date of filing: 14.04.2013
(51) Int. Cl.: C08L 21/00, C08L 23/16, C08L 9/00, B41C 1/02, B41M 1/04, C08J 3/24, C08C 19/00

(54) **USE OF A PRECURSOR FOR PRINTING AND METHOD TO PRODUCE IT**
VERWENDUNG VON VORLÄUFER FÜR DRUCKMEDIEN UND HERSTELLUNGSVERFAHREN DAFÜR
UTILISATION D'UN PRÉCUSEUR DE SUPPORT D'IMPRESSION ET SON PROCÉDÉ DE PRODUCTION

(30) Priority: 16.04.2012 US 201261624465 P
(43) Date of publication of application: 25.02.2015
(73) Proprietor: Enrad Ltd, 79335 Shahar (IL)
(72) Inventor: PELLEGRINI, Mirco, I-38079 Tione di Trento (TN) (IT); ELIYAHU, Nitzan, 79335 Shahar (IL)
(74) Representative: Pearl Cohen Zedek Latzer Baratz UK LLP
(86) International application number: PCT/IL2013/050324
(87) International publication number: WO 2013/156997

(56) References cited:
- WO-A1-02/085625
- WO-A1-2013/156996
- WO-A2-2011/126737
- FR-A1- 2 959 745
- US-B2- 6 747 094

## Description

### FIELD OF THE INVENTION

This invention relates in general to materials and methods for precursors to elastomer media for printing processes. In particular, it relates to new formulations for such precursors that combine natural or synthetic rubber with thermoplastic vulcanizates or microparticles of thermoplastic vulcanizates, thermoplastics that comprise microparticles of rubber, or thermoplastics that comprise microparticles of recycled rubber.

### BACKGROUND OF THE INVENTION

Flexographic printing ("flexo") plate precursors for near-IR laser ablation engraving comprise an elastomeric or polymeric system, preferably made by thermosetting, and include fillers and infrared absorbing material. During recent years, infrared laser diodes have been used for ablation of thin layers (such a use is disclosed, for example, in U.S. Pat. No. 5339737) for use in offset lithographic printing. These lasers are becoming increasingly inexpensive and more powerful and consequently are of increasing interest for laser ablation of thick layers of material such as those found in flexo plate precursors. Such lasers require the presence of absorbing dyes or pigments in the flexo plate as they generally operate around wavelengths of 800nm to 1200nm. They have the potential to enable faster imaging and higher print quality and more reliable engraving than do carbon dioxide lasers. In addition, it is advantageous to optimize imaging speed by formulating plates with higher sensitivity. This will give higher productivity in plate production with the potential of greater profits for the printing houses or trade shops where the plates may be produced. The requirement for high print quality has increased considerably in recent years as flexo printing penetrates markets previously dominated by high quality offset lithography.

One approach to formulation of flexo engraveable precursors is to produce thermoplastic formulations which have not been cross-linked to form thermoset materials. These have been found to be of limited suitability for laser engraving because ablation of thermoplastic plates gives melted portions around the ablated areas and sometimes redeposition of ablated material on the ablated areas. This is because during imaging, heat flows to un-imaged areas that may be sufficient to melt them even if it is insufficient to ablate them.

Although many polymers have been suggested for manufacture of flexo plates, in practice, only polymers that are extremely flexible and elastic such as elastomers have been used. This is because flexo plate layers that are millimeters thick need to be bent around a printing cylinder and secured by bonding which must be strong enough to secure the plate during the print run but still enable the plate to be removed after printing is completed. In the case of a flexo sleeve layer, only elastomers offer the necessary elasticity.

The use of rubber as the basis for flexo plates and sleeves is well-known in the literature. For example, U.S. Pat. No. 4934267 discloses the use of acrylonitrile-butadiene, styrene-butadiene and chloroprene with a textile support in flexo printing plates. The use of natural rubber, nitrile rubber (NBR), ethylene-propylene-diene terpolymer (EPDM), and styrene-butadiene copolymer (SBR) is disclosed in Kern W., et al., "Laser Engraving of Rubbers - the Influence of Fillers," Kautschuck und Gummi, Kunststoffe 1997, 50, 710 - 715. Other disclosures of rubber based plates include U.S. Pat. Nos. 6776095, 6913869, 7223524, 7290487, and U.S. Pat. Appl. Pub. No. 2002/0018958.

Although patents concerned with formulating laser engraved plates may mention laser diode engraving, they have been primarily aimed at carbon dioxide laser imaging and thus include formulations where there is an absence of specifically infra-red absorbing material; U.S. Pat. No. 5259311 discloses such a process. It is frequently the case that formulations designed for ablation by carbon dioxide lasers cannot be easily modified for laser diode ablation by simply adding a suitable infrared absorber. For instance the plate precursor may have been cross-linked with UV light which would either bleach the potential IR dye absorber, or cross-linking may be inhibited by carbon black blocking absorption.

There have also been plate precursors derived from analogous UV sensitive systems that have been adapted for use with IR laser systems. For example, European Pat. No. EP1228864 discloses the use of known liquid photopolymer mixtures that are cured by UV that are then used for carbon dioxide laser engraving. Such plates do not contain infrared absorbing dyes or pigments and therefore are unsuitable for use with IR absorbing laser diode systems. U.S. Pat. No. 5798202 (henceforth **'202**) discloses the use of reinforced block copolymers incorporating carbon black which is UV cured and is still thermoplastic. Such curing will be defective due to the high absorption of UV light by the thick plate layer (see U.S. Pat. No. 6935236). Nonetheless, such block copolymers are the basis of most commercial UV imageable flexo plates.

Numerous performance problems with rubber-based flexo plate precursors remain, however. Examples of specific areas where improvement remains desirable include surface evenness, print quality, means of precursor production, and ability to be used in long printing runs.

Surface evenness. The need for accurate reproduction of delicate half tones makes high surface evenness essential. Because of this requirement, **'202** specifically teaches away from vulcanized rubbers because of the necessity of grinding the resulting plate precursors. Grinding is considered undesirable because it is time-consuming, but it remains the best method of producing an even surface. An additional advantage of grinding is that it disrupts the surface film that is generally formed over any pigment content. Disruption of this surface film exposes the oleophilic pigment such as carbon black more completely, giving improved ink accepting properties to the printing plate. In addition, grinding produces a very accurate total plate thickness that improves print performance. The grinding process, through accurate control of parameters influencing the finish (grit of the grinding medium, peripheral speed of the grinding medium and of the material to be ground, depth of grinding, etc.) can allow the choice among different and more controlled surface roughness. This controlled surface roughness allows better consistency in the amount of ink transferred by the flexo plate or sleeve and further allows adjustement to optimize print quality with a given type of ink.

It has been found that successful grinding is formulation dependent. For instance, the presence of plasticizing materials such as process oils which are regarded in the rubber industry as essential for mixing and calendaring to produce standard sheets of rubber cause severe problems if the sheet has to be ground as is the case for high quality flexo plate precursors. During grinding, plates containing mineral oils produce a sticky mixture of oil and ground rubber that clogs the sanding medium used for grinding, making continuous grinding impossible.

It is therefore necessary to develop formulations that will minimize grinding time and optimize printing properties when the plate surface is ground.

Print quality. While print quality can be qualitatively assessed overall and quantitatively measured by certain parameters, it is difficult to predict how formulation may affect this. Optical density of solid print areas is an important parameter. Sharpness is partially defined by distinguishable line width and the comparative examination of 2 point text under a low-powered microscope.

Methods of precursor production. For present day applications, top quality printing requires high quality plate and sleeve production. For instance, production by laying down multiple layers from solvents is prone to formation of solvent bubbles during the drying process in which the solvent is expelled from the coating. Whereas vulcanization is a proven method that can involve extrusion and calendaring without the danger of clogging during compounding, catalysis of reactions such as urethane formation during compounding and possible extrusion of the reaction products can risk blocking the production equipment. No method of plate precursor production (including those disclosed in **'202**) can match the quality of extrusion-calendaring-grinding.

In methods known in the art (e.g. those disclosed in U.S. Pat. No. 7290487 and U.S. Pat. Appl. Pub. No. 2002/0018958) for production of ablation plate precursors, processing oils are generally considered to be essential for the production of EPDM sheets because, without the oils, the EPDM is too dry and hard and does not adhere sufficiently to the calendar rollers to calendar properly. As described above, such formulations are problematic for continuous grinding. In addition, processing oils introduce other problems for long print run capability.

Long Run Plate capability. Flexo printing frequently requires long printing runs, e.g. in the packaging industry. Formulations known in the art for laser engraveable plates tend to include plasticizers. These plasticizers can leach out during grinding. In addition, during long print runs, plasticizers may be extracted by the inks' water-based solvents and the solvents absorbed by the plate, leading to changes in the plate's durometer hardness and possibly swelling or shrinkage as well. Any changes in the physical properties of the plate will affect the print quality which must be constant during the print run. Consequently, development of plate precursors that lack plasticizers remains an important goal.

Thus, development of a flexo plate precursor made of a material that is appropriate for grinding and can provide an acceptable level of surface evenness, retains optimal print quality, is made by a process that reduces or eliminates solvent bubbles in the final product, does not contain process oils or plasticizers, and retains its quality over long print runs remains a long-felt yet unmet need.

### SUMMARY OF THE INVENTION

The flexo plate precursors disclosed herein provide a solution to this long-felt need. The inventors have discovered, surprisingly, that a combination of rubber and thermoplastic material provides the final elastomer product with physical properties such as stiffness, elasticity, and rheological properties that are superior either to that of rubber or TPV alone. In addition, the precursor combines the desirable plastic properties of TPV with the ability of rubber to tolerate fillers such as carbon black. In preferred embodiments of the invention, the precursor is free of plasticizers or other additives that may leach out during use, cause formation of bubbles in the elastomer sheet, etc.

In particular, the precursors are made from a combination of rubber (natural or synthetic) and a thermoplastic material. It is therefore an object of the invention to disclose a precursor for a flexographic plate or sleeve, wherein said precursor comprises rubber; a material incorporated into said rubber, said material selected from the group consisting of thermoplastic vulcanizate (TPV), microparticles of TPV, thermoplastic incorporating microparticles of rubber, and any combination thereof, and at least one cross-linking agent.

It is a further object of this invention to disclose such a precursor, wherein said microparticles of rubber comprise microparticles of recycled rubber.

It is a further object of this invention to disclose a precursor as defined in any of the above, wherein said rubber is selected from the group consisting of natural rubber (NR), nitrile butadiene rubber (NBR), styrene-butadiene rubber (SBR), polybutadiene (BR), ethylene-propylene-diene tripolymer (EPDM), other synthetic rubbers, and any combination of the above. In some embodiments of the invention, said rubber is EPDM.

It is a further object of this invention to disclose a precursor as defined in any of the above, wherein said TPV is selected from the group consisting of TPVs of the following types of rubber: polypropylene/EPDM (ppEPDM), polyethylene/EPDM (peEPDM), polyethylene/EPM (peEPM), polyamide/acrylic rubber (paACM), thermoplastic-silicone mixtures, styrene-based thermoplastic vulcanizates, poly(styrene-butadiene-styrene) (SBS), styrene isoprene butadiene (SIBS), acrylonitrile butadiene styrene (ABS), polyacrylate (ACM), styrene/acrylonitrile (SAN), and styrene-ethylene-butylene-styrene copolymer (SEBS). In some embodiments of the invention, said TPV is ppEPDM.

It is a further object of this invention to disclose a precursor as defined in any of the above, additionally comprising a cross-linking agent. In some embodiments of the invention, said cross-linking agent is selected from the group consisting of sulfur and peroxides. In some embodiments of the invention, said cross-linking agent is a peroxide selected from the group consisting of butyl-4,4-di(tert-butylperoxy)valerate; di(tert-butyl) peroxide; di(tert-butylperoxyisopropyl)benzene; dicumyl peroxide; and 2,5-dimethyl-2,5-bis-(tert-butylperoxy)hexane.

It is a further object of this invention to disclose a precursor as defined in any of the above, additionally comprising carbon black. In some embodiments of the invention, said precursor comprises between 1% and 45% by weight carbon black. In some embodiments of the invention, said precursor comprises between 5% and 15% by weight carbon black.

It is a further object of this invention to disclose a precursor as defined in any of the above, additionally comprising at least one filler. In some embodiments of the invention, said precursor comprises between 1% and 20% by weight filler. In some embodiments of the invention, said filler comprises a substance selected from the group consisting of silica, mica, kaolin, clay, coal dust, lignin, talc, BaSO₄, CaCO₃, Al(OH)₃, Mg(OH)₂, ZnO, and MgO.

It is a further object of this invention to disclose a precursor as defined in any of the above, wherein the weight ratio of rubber to material selected from the group consisting of thermoplastic vulcanizate (TPV), thermoplastic incorporating microparticles of rubber and any combination thereof is between 90:10 and 10:90. In some embodiments of the invention, the weight ratio of rubber to material selected from the group consisting of thermoplastic vulcanizate (TPV), thermoplastic incorporating microparticles of rubber and any combination thereof TPV is between 70:30 and 50:50.

It is a further object of this invention to disclose a precursor as defined in any of the above, additionally comprising a cross-linking co-agent. In some embodiments of the invention, said cross-linking co-agent is an acrylate. In some embodiments of the invention, said cross-linking co-agent is trimethyl-ol-propane-trimethylacrylate (TMPTMA) In some embodiments of the invention, said cross-linking co-agent is triallyl cyanurate (TAC) or triallyl isocyanurate (TAIC).

It is a further object of this invention to disclose a precursor as defined in any of the above, wherein said precursor is free of any plasticizer.

It is a further object of this invention to disclose a precursor as defined in any of the above, wherein said precursor is free of any process oil.

It is a further object of this invention to disclose a precursor as defined in any of the above, additionally comprising bubbles of pressurized gas. In some embodiments of the invention, said pressurized gas is pressurized CO₂.

It is a further object of this invention to disclose a precursor as defined in any of the above, wherein said precursor is configured for ablation by laser irradiation.

It is a further object of this invention to disclose a precursor as defined in any of the above, wherein said precursor is configured for ablation by irradiation by infrared light.

It is a further object of this invention to disclose a precursor as defined in any of the above, wherein at least one of said rubber, said TPV, and said thermoplastic incorporating microparticles of rubber is at least partially cross-linked. In some embodiments of the invention, said microparticles of rubber are at least partially crosslinked with said rubber. In some embodiments of the invention, said microparticles of rubber are at least partially cross-linked with said thermoplastic.

It is a further object of this invention to disclose a precursor as defined in any of the above, wherein at least one of said rubber, said TPV, said thermoplastic incorporating microparticles of rubber, and thermoplastic incorporating microparticles of recycled rubber is substantially entirely cross-linked. In some embodiments of the invention, said microparticles of rubber are at least partially crosslinked with said rubber. In some embodiments of the invention, said microparticles of rubber are at least partially cross-linked with said thermoplastic.

It is a further object of this invention to disclose a precursor as defined in any of the above, wherein said precursor is bonded to a backing surface. In some embodiments of the invention, said backing surface comprises a material selected from the group consisting of fabric, liner, a compressible layer, polymer film, fiberglass sheet, fiberglass cylinder, and extruded thermoplastic cylinder. In some embodiments of the invention, said backing surface comprises polyester film.

It is a further object of this invention to disclose a precursor as defined in any of the above, wherein said precursor is coated on a backing surface. In some embodiments of the invention, said backing surface comprises a material selected from the group consisting of fabric, liner, a compressible layer, and a polymer film.

It is a further object of this invention to disclose a method of producing a precursor for a flexographic plate or sleeve, wherein said method comprises: mixing rubber and a material selected from the group consisting of TPV, thermoplastic incorporating microparticles of rubber, and any combination thereof; adding at least one cross-linking agent after said step of mixing rubber and TPV; and, activating said cross-linking agent whereby said rubber and/or said TPV is at least partially cross-linked.

It is a further object of this invention to disclose such a method, wherein said thermoplastic incorporating microparticles of rubber comprises thermoplastic incorporating microparticles of recycled rubber.

It is a further object of this invention to disclose such a method as defined in any of the above, wherein said rubber is selected from the group consisting of SBR, BR, NR, EPDM, ACM, and any combination of the above, and said TPV is selected from the group consisting of TPVs of the following types of rubber: ppEPDM, thermoplastc-silicone mixtures, peEPDM, peEPM, paACM, styrene-based thermoplastic vulcanizates, SBS, SEBS, SIBS, SAN and ABS.

It is a further object of this invention to disclose such a method as defined in any of the above, wherein said step of mixing takes place within at least one apparatus selected from the group consisting of mixers, extruders, and mills.

It is a further object of this invention to disclose such a method as defined in any of the above, wherein said step of mixing comprises mixing at an operating temperature above the melting point of said TPV or thermoplastic.

It is a further object of this invention to disclose such a method as defined in any of the above, wherein said step of mixing comprises mixing at an operating temperature of between 170 and 220 °C.

It is a further object of this invention to disclose such a method as defined in any of the above, wherein said step of mixing comprises mixing until a constant stress is observed.

It is a further object of this invention to disclose such a method as defined in any of the above, wherein said step of mixing comprises a step of mixing rubber and material selected from the group consisting of TPV, thermoplastic incorporating microparticles of rubber, and any combination thereof in a weight ratio (rubber: other substances) of between 90:10 and 10:90. In some embodiments of the invention, said step of mixing comprises a step of mixing rubber and material selected from the group consisting of TPV, thermoplastic incorporating microparticles of rubber, and any combination thereof in a weight ratio (rubber: other substances) of between 70:30 and 50:50.

It is a further object of this invention to disclose such a method as defined in any of the above, wherein said step of adding at least one cross-linking agent comprises adding at least one cross-linking agent selected from the group consisting of sulfur, sulfur donors, phenolic resins and peroxides. In some embodiments of the invention, said step of adding at least one cross-linking agent comprises adding at least one peroxide selected from the group consisting of butyl-4,4-di(tert-butylperoxy)valerate; di(tert-butyl) peroxide; di(tert-butylperoxyisopropyl)benzene; dicumyl peroxide; and 2,5-dimethyl-2,5-bis-(tert-butylperoxy)hexane.

It is a further object of this invention to disclose such a method as defined in any of the above, wherein said step of mixing takes place in an internal mixer, and additionally comprising a step of recompounding on a two-roll mill, said step of adding cross-linker taking place at least partially during the performance of said step of recompounding.

It is a further object of this invention to disclose such a method as defined in any of the above, additionally comprising a step of adding carbon black. In some embodiments of the invention, said step of adding carbon black comprises adding between 1% and 45% by weight carbon black. In some embodiments of the invention, said step of adding carbon black comprises adding between 5% and 15% by weight carbon black. In some embodiments of the invention, said step of mixing comprises mixing said rubber and said material selected from the group consisting of TPV, thermoplastic incorporating microparticles of rubber, and any combination thereof within an internal mixer, said step of adding carbon black comprises adding carbon black to said internal mixer, and said step of adding at least one cross-linking agent comprises adding cross-linking agent to the mixture after it has been removed from said mixer.

It is a further object of this invention to disclose such a method as defined in any of the above, additionally comprising a step of adding a cross-linking co-agent. In some embodiments of the invention, said step of adding a cross-linking co-agent comprises adding TMPTMA. In some embodiments of the invention, said step of adding a cross-linking co-agent takes place prior to the completion of said step of mixing. In some embodiments of the invention, said step of adding a cross-linking co-agent takes place subsequent to the completion of said step of mixing. In some embodiments of the invention, said step of mixing comprises mixing said rubber and said material selected from the group consisting of TPV, thermoplastic incorporating microparticles of rubber, and any combination thereof within an internal mixer, and said step of adding at least one cross-linking agent comprises adding cross-linking agent to the mixture after it has been removed from said mixer.

It is a further object of this invention to disclose such a method as defined in any of the above, additionally comprising a step of compounding said rubber and said TPV on a mill, said step of compounding taking place after said step of mixing. In some embodiments of the invention, said step of compounding takes place prior to said step of adding at least one cross-linking agent. In some embodiments of the invention, said step of adding at least one cross-linking agent takes place at least partially while said step of compounding is taking place.

It is a further object of this invention to disclose such a method as defined in any of the above, additionally comprising a step of depositing the mixture produced in said step of mixing onto a fabric base while feeding through a calendar, thereby producing a continuous roll of material.

It is a further object of this invention to disclose such a method as defined in any of the above, additionally comprising a step of feeding the material produced in said step of adding a cross-linking agent into an apparatus selected from the group consisting of autoclaves, flat presses, ovens, and rotocures, and further wherein said step of activating said cross-linking agent occurs at least partially within said apparatus.

It is a further object of this invention to disclose such a method as defined in any of the above, additionally comprising a step of grinding the at least partially cross-linked material produced in said step of activating said cross-linking agent.

It is a further object of this invention to disclose such a method as defined in any of the above, additionally comprising a step of adding filler. In some embodiments of the invention, said step of adding filler comprises a step of adding a filler comprising at least one substance selected from the group consisting of silica, mica, kaolin, clay, coal dust, lignin, talc, BaSO₄, CaCO₃, Al(OH)₃, Mg(OH)₂, ZnO, and MgO, and said step of adding filler takes place prior to or substantially concurrent with said step of adding at least one cross-linking agent.

It is a further object of this invention to disclose such a method as defined in any of the above, additionally comprising a step of injecting a pressurized gas during said step of mixing. In some embodiments of the invention, said step of injecting a pressurized gas during said step of mixing comprises injecting pressurized CO₂.

It is a further object of this invention to disclose such a method as defined in any of the above, additionally comprising bonding the at least partially cross-linked material produced in said step of activating said cross-linking agent to a backing surface. In some embodiments of the invention, said step of bonding comprises bonding said at least partially cross-linked material to a backing surface comprising a material selected from the group consisting of polymer film, fiberglass sheet, fiberglass cylinder, and extruded thermoplastic cylinder. In some embodiments of the invention, said step of bonding comprises bonding said at least partially cross-linked material to a backing surface comprising a polyester film.

It is a further object of this invention to disclose such a method as defined in any of the above, additionally comprising a step of coating the at least partially cross-linked material produced in said step of activating said cross-linking agent on a backing surface. In some embodiments of the invention, said backing surface comprises a material selected from the group consisting of fabric, liner, a compressible layer, and a polymer film.

It is a further object of this invention to disclose such a method as defined in any of the above, wherein said step of mixing comprises mixing 60 parts by weight of EPDM with 40 parts by weight of ppEPDM at a mixer operating temperature of between 170 and 220 °C; said step of adding a cross-linking agent comprises adding 5.3 parts by weight of 40% butyl 4,4-di(tert-butylperoxy)valerate powder on calcium carbonate and silica; and additionally comprising steps, performed prior to said step of adding a cross-linking agent, of adding 1.2 parts by weight polyethylene wax; adding 0.6 parts by weight ZnO; adding 1.2 parts by weight MgO; adding 12.0 parts by weight carbon black; and, adding 3.5 parts by weight TMPTMA.

It is a further object of this invention to disclose such a method as defined in any of the above, wherein said method does not comprise any step of adding plasticizer.

It is a further object of this invention to disclose such a method as defined in any of the above, wherein said method does not comprise any step of adding process oil.

It is a further object of this invention to disclose such a method as defined in any of the above, wherein said step of mixing comprises mixing all components of said precursor except for said cross-linking agent and said cross-linking co-agent within an apparatus selected from the group consisting of extruders and mixers.

Also disclosed is a precursor for a flexographic plate or sleeve, produced according to the method as defined in any of the above.

It is a further object of this invention to disclose the use of the precursor as defined in any of the above in a flexographic plate or sleeve.

It is a further object of this invention to disclose the use of the precursor as defined in any of the above in printing. In some embodiments of the invention, said printing is performed by a method selected from the group consisting of gravure printing and embossing, dry offset beverage can print processes, and offset printing blankets.

It is a further object of this invention to disclose a flexographic plate or sleeve comprising the precursor as defined in any of the above.

It is a further object of this invention to disclose the use of the flexographic plate or sleeve as defined in any of the above in printing. In some embodiments of the invention, said printing is performed by a method selected from the group consisting of gravure printing and embossing, dry offset beverage can print processes, and offset printing blankets.

### BRIEF DESCRIPTION OF THE DRAWINGS

The invention will now be described with reference to the drawings, wherein
FIG. **1** presents results of TGA analyses of samples of elastomers prepared from a precursor according to one embodiment of the invention disclosed herein;
FIG. **2** presents results of DSC analyses of samples of elastomers prepared from a precursor according to one embodiment of the invention disclosed herein;
FIG. **3** presents results of DSC analyses of individual components of the compositions herein disclosed;
FIG. **4** presents results of a DSC analysis of a low-hardness elastomer prepared from a precursor according to one embodiment of the invention disclosed herein; and,
FIG. **5** presents the results of a TGA analysis of a typical rubber composition known in the art that contains a silica filler.

### DETAILED DESCRIPTION OF THE PREFERRED EMBODIMENTS

In the following description, various aspects of the invention will be described. For the purposes of explanation, specific details are set forth in order to provide a thorough understanding of the invention. It will be apparent to one skilled in the art that there are other embodiments of the invention that differ in details without affecting the essential nature thereof. Therefore the invention is not limited by that which is illustrated in the figures and described in the specification and examples, but only as indicated in the accompanying claims, with the proper scope determined only by the broadest interpretation of said claims.

For example, while the examples herein provided are directed toward the use of the materials and methods herein disclosed for use in flexographic printing, one of ordinary skill in the art will readily appreciate that they are equally useful in other methods of printing. Examples of additional printing methods for which the materials disclosed herein can be used include gravure printing and embossing, dry offset beverage can print processes, and offset printing blankets. Such adaptations for other forms of printing are within the scope of the invention as contemplated by the inventors.

As used herein, the term "flexo plate precursor" refers to a flexo plate prior to placement of the image thereupon. The term "flexo sleeve precursor" refers to a flex sleeve prior to placement of the image thereupon. The term "flexo precursor" refers to both the flexo plate and the flex sleeve precursors.

As used herein, the term "imaging," as used in connection with laser engraving, refers to ablation of background areas that leaves intact the areas of the plate that will be inked and printed by flexography.

As used herein, the term "cross-linking" refers to any process that bonds chains of a polymer one to another. Vulcanization of rubber is thus one example of "cross-linking" as the term is used herein.

As mentioned above, the inventors have unexpectedly discovered that a wide range of rubbers can be modified with TPV to give overall improvements in flexo plate precursor properties and the printing performance of such plates. Examples of such rubbers include natural rubber (NR), polybutadiene (BR), styrene-butadiene rubber (SBR), polyacrylate (ACM), ethylene propylene diene monomer rubber (EPDM), and mixtures thereof. Non-limiting examples of TPVs that have been found useful for modifying the properties of the rubber include polypropylene-EPDM blends (ppEPDM), peEPDM, peEPM, silicone-thermoplastic blends such as commercially available TPSiV™ (Dow), styrene-based TPVs such as commercially available MULTIFLEX® (Dow), - (ACM) TPV - Zeotherm® (Zeon) poly(styrene-butadiene-styrene) (SBS), styrene-isoprene-butadiene (SIBS), acrylonitrile butadiene styrene (ABS), and styrene-ethylene-butylene-styrene copolymer (SEBS). In addition to TPVs, thermoplastic materials that incorporate microparticles of rubber or recycled rubber can be used.

In some preferred embodiments, the rubber used is EPDM, and the TPV used is ppEPDM.

The Durometer hardness of the precursor can be fine-tuned by appropriate choice of the relative amounts of the components, e.g. by the ratio of rubber to TPV and the ratio of rubber to filler. The specific ratio of rubber to TPV used in a particular printing application will therefore depend on the specific needs of that application. The inventors have found that the tackiness of the final composition depends on the amount of elastomer (rubber) added, while the brittleness depends on the amound of TPV added. Too high a rubber:TPV ratio produces a formulation that is too tacky and lacks sufficient green strength to permit good calendaring and is of insufficient mechanical strength after vulcanization, while too low of a ratio produces a formulation that is too dry, lacks green elongation and is consequently difficult to calendar, and that yields plate precursors that are too brittle for practical use. Thus, in preferred embodiments of the invention, the ratio of rubber to TPV is between 90:10 and 10:90 by weight. In the most preferred embodiments, the ratio of rubber to TPV is between 70:30 and 50:50 by weight.

These materials have been found to impart superior properties to the rubber in the formation of flexographic engraveable precursors. Rubber/TPV formulations have significantly reduced swelling and leaching relative to formulations based on one or the other of the materials. Since, in preferred embodiments, inorganic material accounts for no more than a few percent of the total weight of the material, these formulations are significantly cleaner than materials known in the art for manufacture of flexographic plates. Because the formulation partially comprises thermoplastic material, the temperature rise during curing is significantly less than that seen during curing of elastomers based entirely on rubber. Additional advantages of the rubber/TPV formulations of the present invention include faster ablation relative to formulations known in the prior art, and fewer shadows during printing due to the material's greater stiffness. In addition, the physical properties of the final product can be controlled by the level of cross-linking, which can be controlled by the amount of cross-linking agent added or the cross-linking conditions.

In order to be infrared-ablatable, in particular, by irradiation with light from an infrared diode laser, the material has to be sensitive to infrared radiation in the range of 800 nm to 1200 nm. It has been found that infrared dyes are generally not suitable as they tend to be chemically affected during vulcanization of the EPDM rubber. Therefore, in preferred embodiments, the formulation contains carbon black, which is a much more suitable IR absorbing material for precursors. In preferred embodiments of the invention, the formulation contains between 1% and 45% carbon black by weight. In the most preferred embodiments of the invention, the formulation contains between 5% and 15% carbon black by weight. Note that in the formulations disclosed in the present invention, properties such as reinforcement or hardness are not of concern in determining the carbon black concentration since, as explained above, these properties can be fixed by an appropriate choice of the other formulation parameters such as the rubber:TPV ratio, the type and amount of cross-linking agent, and the amount and types of fillers and other additives.

The precursors disclosed in the present invention are also suitable for ablation by other lasers such as CO₂ lasers that are sufficiently powerful such that the ablation does not depend on the material being strongly absorbing at the output wavelength of the laser.

The inventors have unexpectedly discovered that contrary to what is generally accepted in the art, there is no requirement for the use of fillers such as silica, although such fillers can be used in some embodiments of the invention.

While any cross-linking agent known in the art may be used, e.g. peroxides, phenolic resins or sulfur, in preferred embodiments of the invention, peroxides are used. Peroxides are preferred because they can react with carbon-carbon single bonds, thereby producing a higher curing density and better compression set. Compression set, which represents the resistance to changes in the plate due to the impact on the plate in each printing impression followed by a brief recovery following each impression. In addition, peroxide cross-linked precursors tend to produce less odor during ablation than do sulfur cross-linked precursors. Non-limiting examples of peroxide cross-linking agents suitable for use in the present invention include butyl-4,4-di(tert-butylperoxy)valerate; di(tert-butyl) peroxide; di(tert-butylperoxyisopropyl)benzene; dicumyl peroxide; and 2,5-dimethyl-2,5-bis-(tert-butylperoxy)hexane. In some embodiments of the invention, the material is only partially cured before use.

In preferred embodiments of the invention, at least one cross-linking co-agent is used. Any cross-linking co-agent known in the art may be used. Examples of suitable cross-linking co-agents include acrylates, triazines; ZnO/stearic acid; sulfur donors such as dithiocarbamates, thiurams, thaizoles, guanidines, and sulfenamides; and such cross-linking co-agents as BMI-MP, EDMA, TMPTMA, 1,2-BR, DATP, DVB, TAC, TAIC, and TAP. In preferred embodiments of the invention, TMPTMA (trimethyl-ol-propane-trimethylacrylate) is used as the cross-linking co-agent.

In preferred embodiments of the invention, the formulation does not contain any plasticizer (e.g. mineral oil) or process oil. These oils are generally added in order to improve the material's ability to accept fillers. As discussed above, these additives tend to come to the surface during grinding and thus block the grinding medium. They also give plates that may swell or lose material during long run printing and may sweat out during long term storage of the plate precursors. Due to the inclusion of thermoplastic material, the precursors of the present invention need far smaller amounts of filler to obtain the needed mechanical characteristics, without any necessity for addition of plasticizer or process oil.

In some embodiments of the invention, the plate precursor is bonded, coated, or coextruded on a backing. The backing may be a polymer film made from a material such as polyester; a fiberglass sheet; a fiberglass cylinder; a thermoplastic cylinder; a compressible layer; fabric; etc. The absence of plasticizer in the plate precursors of the present invention provides the advantage that in plate precursors that include plasticizers, sweating of plasticizer can reduce the adhesion between the rubber layer and the polyester causing debonding either during printing or when the printing plate is removed from the press after printing. Methods for bonding or coating elastomeric materials onto such substrates are well-known in the art.

In some embodiments of the invention, the precursor comprises bubbles of pressurized gas injected into the material while it is being mixed in a mixer or extruder. In preferred embodiments of the invention, the pressurized gas is CO₂. In the most preferred embodiments of the invention, it is critical CO₂. The injection of pressurized gas and the presence of a thermoplastic phase in the precursor produce bubbles that are self-sealing upon laser ablation. These bubbles increase the exposed surface area, improving the resolution and sensitivity to ablation of the flexographic plate. Voids within the material may be incorporated by any other means known in the art (e.g. by insertion of hollow spheres or by use of chemical blowing agents).

It is also within the scope of the invention to disclose a method for manufacturing the precursors disclosed herein. The method comprises steps of mixing rubber and a material selected from the group consisting of TPVs, thermoplastics into which microparticles of rubber (possibly recycled rubber) have been incorporated; adding a cross-linking agent; and activating the cross-linking agent, whereby the rubber is at least partially cross-linked. In some embodiments of the invention, the cross-linking is performed so as to cross-link the TPV, either internally, or to the polymer chains of the rubber, or both. The mixing may take place in any suitable apparatus such as an internal mixer or extruder, and any means for activating the cross-linking agent known in the art (e.g. heat or UV irradiation) may be used.

As mentioned above, the precursors may incorporate a large number of additives such as cross-linking co-agents, carbon black, and fillers. The inventors have found that the properties of the final product are not strongly affected by the order in which the components are added or mixed, as long as the cross-linking agent is added last. Thus, in some embodiments of the invention, the rubber, thermoplastic, and carbon black are mixed in a mixer or extruder, and the remaining components added after the mixture has been removed from the mixer or extruder. In other embodiments, all components of the precursors except for the cross-linking agent are added in the mixer or extruder, and the cross-linking agent added to the mixture after it has been removed from the mixer or extruder. The co-agent can be added either in the mixing stage at high temperature or in the recompounding stage in an open 2-roll mill.

In preferred embodiments of the method herein disclosed, it comprises compounding the rubber using standard equipment for rubber processing (e.g. a 2-roll mix/mill, and a Banbury-type internal mixer). During this step the ingredients are mixed with the rubber/TPV base. The rubber in its un-vulcanized state is fed into a calender where a continuous sheet of rubber is deposited onto a carrier (fabric) and wound into a roll which is then cross-linked, preferably by heating in an autoclave at defined temperature and pressure conditions.

### EXAMPLE 1

The following example presents a typical embodiment of the precursor and of the method for its preparation.

60 parts by weight of EPDM rubber (ROYALENE 525 grade) were combined with 40 parts by weight of ppEPDM (FORPRENE, obtained from So.f.ter SPA) and fed into a Banbury mixer operating between 195 and 200 °C. The following ingredients were added at the beginning of the mixing stage: Polyethylene AC6 (1.2 parts by weight); ZnO (0.6 parts by weight); carbon black (12.0 parts by weight); and MgO (1.2 parts by weight).

The entire mixture was mixed until the mixer provided a constant stress reading (approximately 5 minutes of additional mixing). The resulting mixture was removed from the mixer as a homogeneous mass. The mass was then masticated in a "Vals" two roller mill along with 3.5 parts by weight of TMPTMA70 and 5.3 parts by weight of a peroxide crosslinking agent (TRIGONOX 17-40B Butyl 4,4-di(tert-butylperoxy)valerate or LUPEROX DC40 dicumyl peroxide). Mastication continued until the material formed into a sheet. The Mooney viscosity of the mixture was 142.2 at 100 °C.

### EXAMPLE 2

An elastomeric composition was produced from the precursor formed in Example 1. The sheet removed from the mill and fed through a calendar, along with a fabric base, at a temperature of approximately 80 °C. The product was then fed into an autoclave at 150 °C. The resulting sheet was then laminated onto a 175 µm PET film and then post-cured in an autoclave at 120 °C.

### EXAMPLE 3

Elastomeric compositions were made by cross-linking of precursors made according to the present invention. The compositions were placed for 40 min in a pneumatic press at 165°C and 8 atm pressure, and the tensile strength measured. The tensile strength of the compositions of the present invention was typically in the range of 13.7 - 15.7 MPa (140 - 160 kg cm⁻²). The tensile strengths of a composition containing all of the components of the present invention except for TPV and of EPDM were measured and found to be about 11 MPa (112 - 115 kg cm⁻²). The results of this experiment demonstrate that the present compositions have higher tensile strengths than those of the components from which they are made.

### EXAMPLE 4

Calorimetric measurements were made of elastomeric compositions produced by cross-linking of precursors made according to the present invention. The compositions of the precursors are given in Table 1.

**TABLE 1**

| **Component** | **Sample Number** | |
|---|---|---|
| | **B2-1** | **B2-3** |
| EPDM | 100 g | 100 g |
| ppEPDM | 70 g | 40.18 g |
| carbon black | 20 g | 11.48 g |
| Polyethylene AC6 | 2 g | 2 g |
| ZnO | 1g | 1 g |
| MgO | 2 g | 2 g |
| TMPTMA70 | 6 g | 6 g |
| crosslinking agent (TRIGONOX 17-40-B) | 9 g | 9 g |
| **Mooney Viscosity, 100 °C** | 142.2 | 100.1 |
| **Mooney Viscosity, 120 °C** | 62.0 | 44.0 |

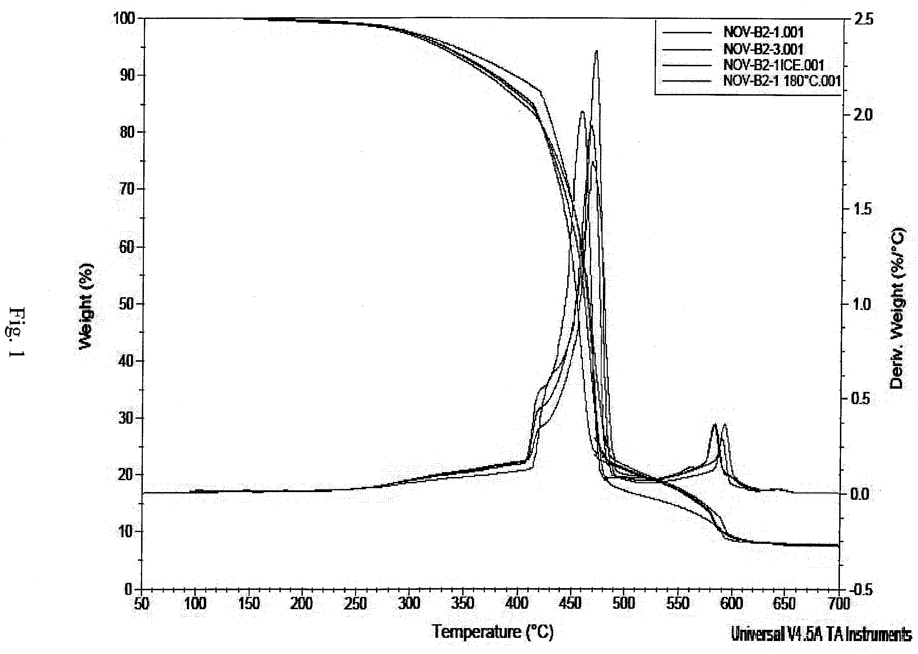

Reference is now made to FIG. 1, which shows results of thermogravimetric analyses (TGA) of four samples of elastomers made by cross-linking of the precursors listed in Table 1. The decomposition proceeds in two steps; the lower-temperature decomposition (derivative peak at ∼450 °C) indicates decomposition of the rubber/TPV component, while the higher-temperature decomposition (derivative peak at 550 - 600 °C) indicates decomposition of the carbon black component. Noteworthy is that after the decomposition is complete, only ∼3% of the original weight remains. This result is in contrast to typical rubber compositions, in which ∼30% of the original material remains after decomposition.

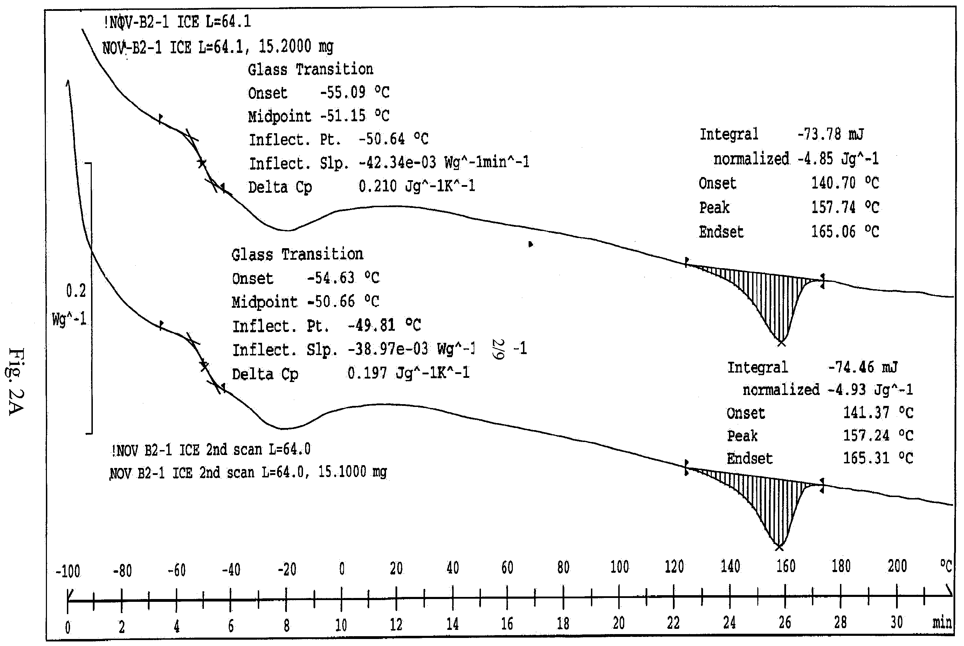

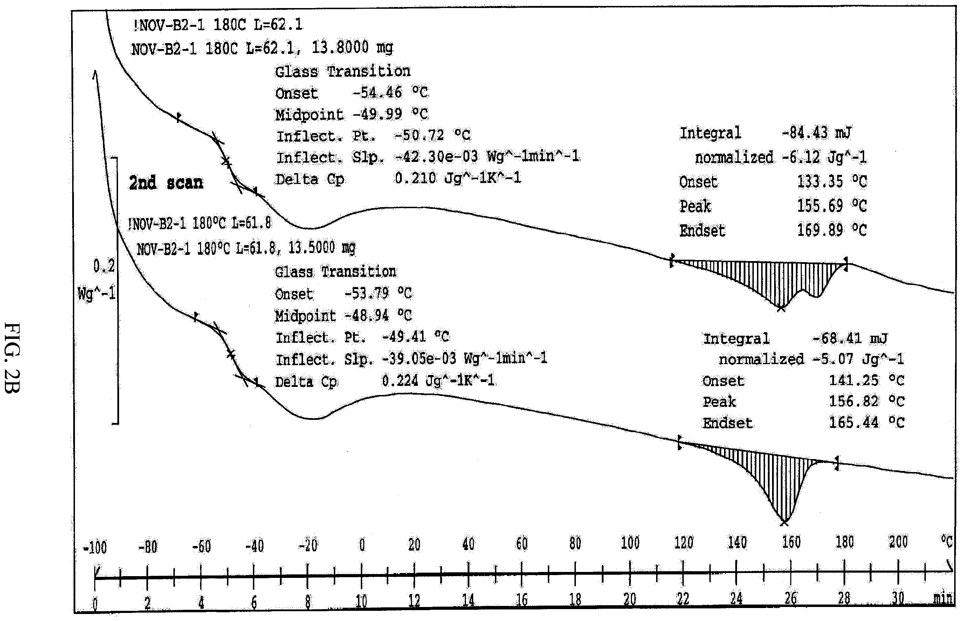

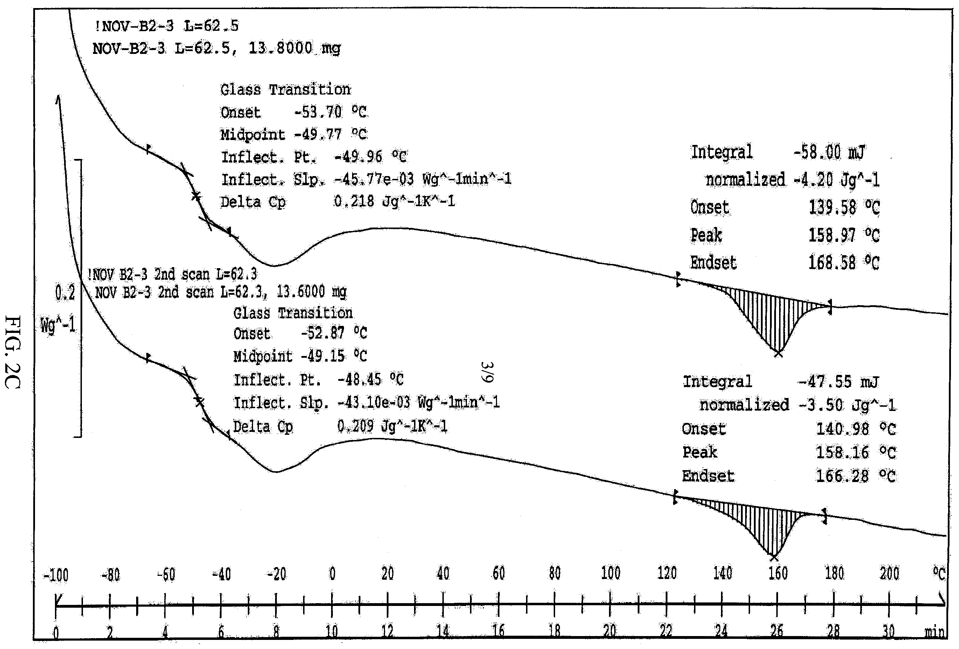

Reference is now made to FIGs. **2A - 2C****,** which show a series of differential scanning calorimetry (DSC) analyses of samples of an elastomer made by cross-linking of the precursors listed in Table 1; results for sample "B2-1" are shown in FIGs. **2A** and **2B****,** while results for sample "B2-3" are shown in FIG. **2C****.** The DSC results demonstrate that, unlike typical rubber compositions known in the art, elastomers produced from the precursor disclosed herein show a single definite melting point.

### EXAMPLE 5

As was disclosed above, the physical properties of the precursors of the present invention can be fine-tuned by appropriate choice of the relative amounts of the components, particularly the rubber and TPV. A series of compositions with varying relative amounts of the components were prepared, and the Shore A hardness was measured in a pneumatic press at 165 °C (40 min, 8 atm) and at 220 °C (20 min, 4 atm). The results are summarized in Table 2.

**TABLE 2**

| **Component** | **Sample No.** | | | | | | |
|---|---|---|---|---|---|---|---|
| | **B3'** | **B3-1** | **B3-2** | **B2'** | **B2-1** | **B2-2** | **B2-3** |
| EPDM | 100 g | 100 g | 100 g | 100 g | 100 g | 100 g | 100 g |
| ppEPDM | 50.1 g | 70 g | 60.06 g | 50.1 g | 70 g | 60.06 g | 40.18 g |
| carbon black | 14.31 g | 20 g | 17.16 g | 14.31 g | 20 g | 17.16 g | 11.48 g |
| Polyethylene AC6 | 2 g | 2 g | 2 g | 2 g | 2 g | 2 g | 2 g |
| ZnO | 1 g | 1 g | 1 g | 1 g | 1 g | 1 g | 1 g |
| MgO | 2 g | 2 g | 2 g | 2 g | 2 g | 2 g | 2 g |
| TMPTMA 70 | 6 g | 6 g | 6 g | 6 g | 6 g | 6 g | 6 g |
| crosslinking agent (TRIGONOX 17-40B) | - | - | - | 9 g | 9 g | 9 g | 9 g |
| crosslinking agent (LUPEROX DC40) | 9 g | 9 g | 9 g | - | - | - | - |
| Shore Hardness A 165 °C | 70.6 | 75.1 | 72.7 | 72.2 | 75.2 | 74.7 | 70.6 |
| Shore Hardness A 220 °C | 66.6 | 71.9 | 67.4 | 69.7 | 71.9 | 71.0 | 68.5 |

### EXAMPLE 6

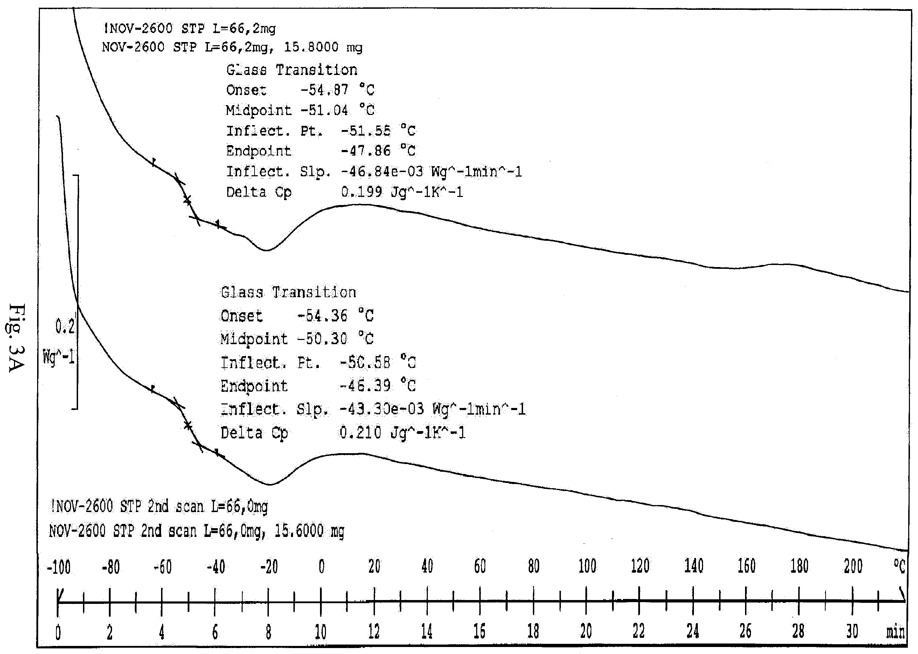

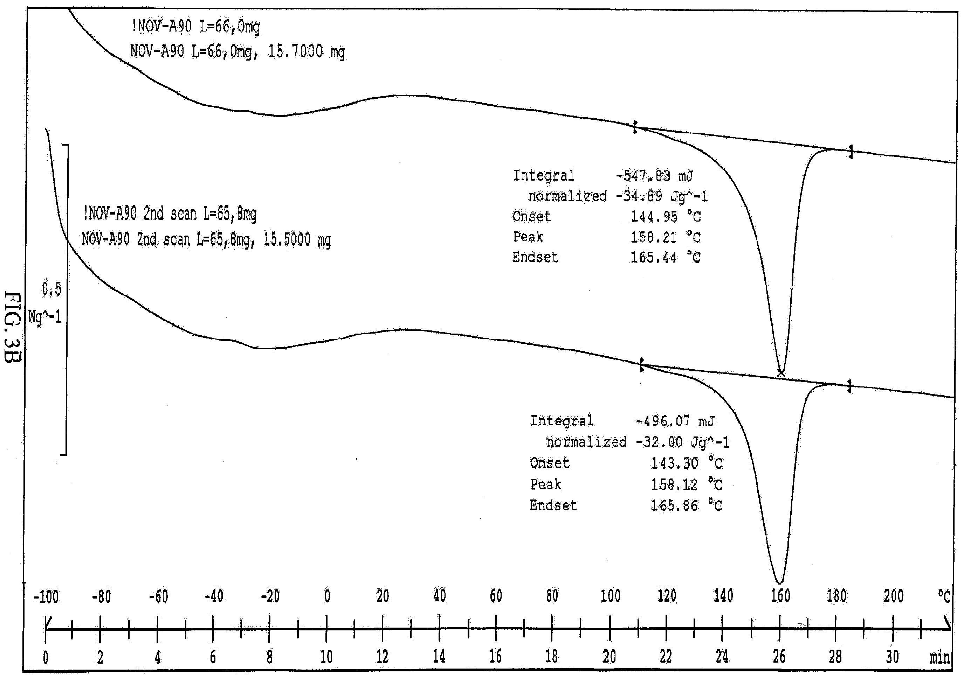

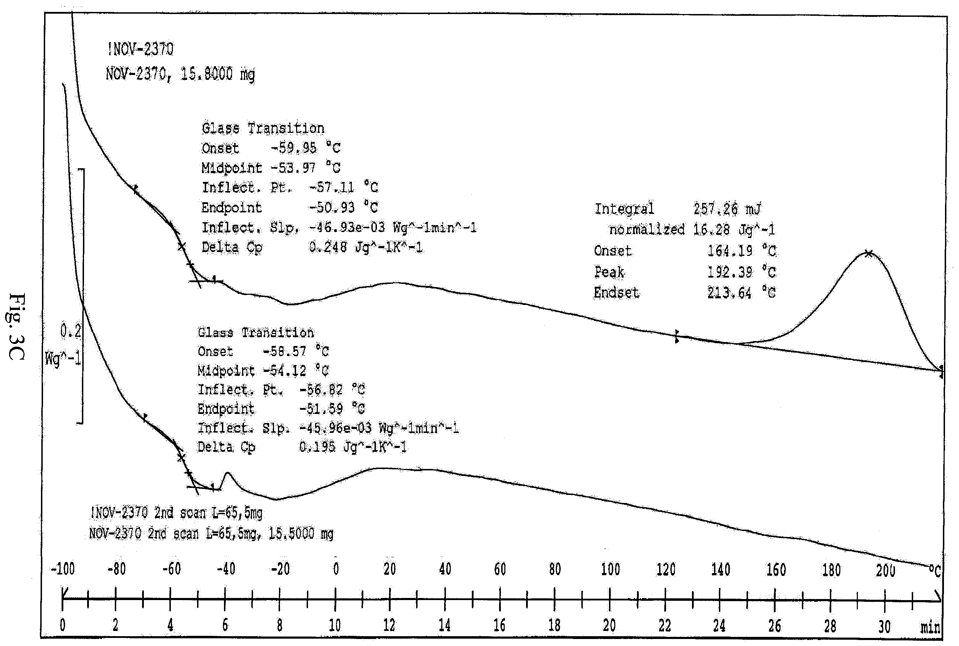

Calorimetric analyses were performed of a series of compositions in which each composition was lacking at least one component of the compositions of the present invention. Reference is now made to FIG. **3A****,** which presents a DSC analysis of ppEDM; FIG. **3B****,** which presents a DSC analysis of a composition of a composition comprising EPDM and a cross-linking agent, but no TPV; and FIG. **3C****,** which presents a DSC analysis of a composition comprising EPDM, carbon black, and a cross-linking agent, but no TPV. As can be seen by comparison of the DSC results shown in FIG. **3** to those shown in FIG. **2****,** the low-temperature thermal behavior of the compositions of the current invention is comparable to that of rubber (or rubber containing similar fillers), while the high-temperature behavior is comparable to that of TPV. Furthermore, the compositions of the present invention do not show an externally visible melt at high temperature. That is, the improved physical properties do not come at the expense of any noticeable change in the thermal properties.

### EXAMPLE 7

Additional non-limiting embodiments of the materials herein disclosed were designed to facilitate "self-healing" during the laser ablation process. These formulations are summarized in Table 3. As can be seen from the table, these formulations are softer than those presented above, with a Shore A hardness under 60 for formulations represented by samples 2660-01 and 2660-02 and a Shore A hardness under 40 for formulations represented by samples 2640A-06, 2640A-07, and 2640A-08.

**TABLE 3**

| **Component** | **Sample No.** | | | | |
|---|---|---|---|---|---|
| | **2660-01** | **2660-02** | **2640A-06** | **2640A-07** | **2640A-08** |
| EPDM | 100.000 g | 100.000 g | 100.000 g | 100.000 g | 100.000 g |
| ethylene - vinyl acetate random copolymer comprising microparticles of rubber | 30.000 g | 30.000 g | 10.000 g | 10.000 g | 10.000 g |
| liquid EPDM | - | - | - | 10.000 g | 10.000 g |
| carbon black | 11.500 g | 11.500 g | 11.500 g | 11.500 g | 11.500 g |
| Polyethylene AC6 | 2.000 g | 2.000 g | 2.000 g | 2.000 g | 2.000 g |
| ZnO | 1.000 g | 1.000 g | 1.000 g | 1.000 g | 1.000 g |
| MgO | 2.000 g | 2.000 g | 2.000 g | 2.000 g | 2.000 g |
| TMPTMA70 | 3.000 g | 4.000 g | 3.000 g | 3.000 g | 3.000 g |
| crosslinking agent (TRIGONOX 17-40B) | 4.500 g | 6.000 g | 4.500 g | 4.500 g | 4.500 g |

| **Property** | **Sample No.** | | | | |
|---|---|---|---|---|---|
| | **2660-01** | **2660-02** | **2640A-06** | **2640A-07** | **2640A-08** |
| Shore Hardness A 165 °C | 55.1 | 60.2 | 39.9 | 38.4 | 34.3 |

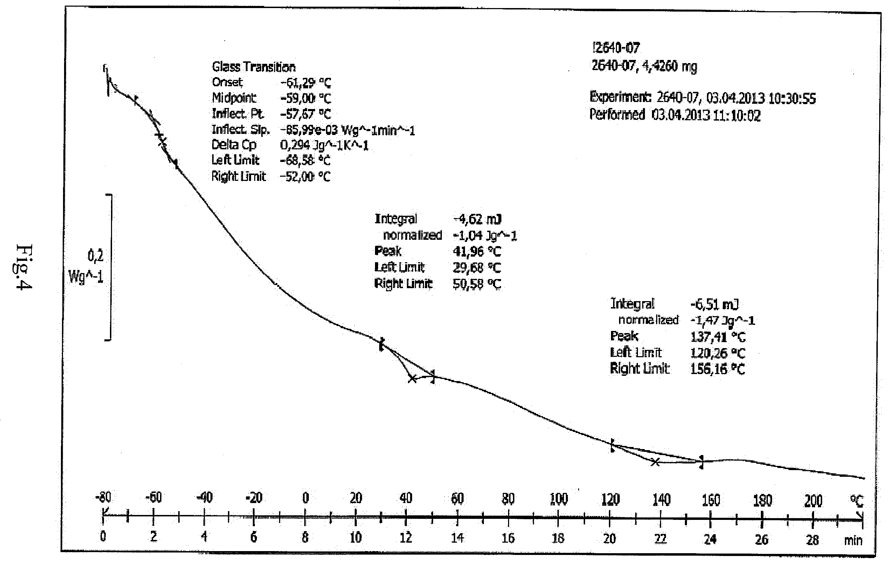

Reference is now made to FIG. **4****,** which presents a DSC trace for sample 2640A-07. The DSC results clearly show that despite the reduction in hardness relative to the formulations presented above, the basic thermal properties of the precursor are retained.

### EXAMPLE 8

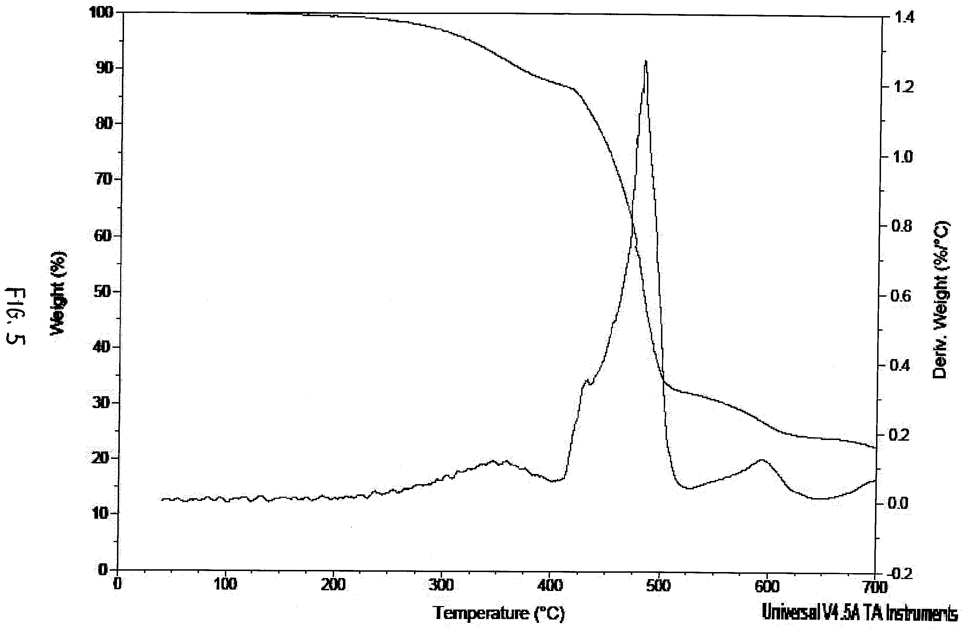

For purposes of comparison, a rubber composition lacking TPV, similar to those known in the art, was prepared. The composition consisted of 100 parts EPDM, 30 parts plasticizer, 12 parts carbon black, 32 parts silica, 6 parts silane, 6 parts ZnO, 1 part stearic acid, 10 parts peroxide cross-linking agent, and 1.5 parts TAC. Reference is now made to FIG. **5****,** which presents the results of a TGA analysis of this composition. The TGA was performed under the same conditions as were used in the TGA analysis shown in FIG. **1****.** As can be seen in the figure, more than 20% of the initial weight remains after the conclusion of the TGA run, in contrast to the compositions of the present invention, in which essentially none of the material initially present remains. Also, unlike the compositions of the present invention, there is no single sharp derivative peak corresponding to oxidation of the carbon black contained within the composition.

## Claims

1. Use of a precursor in printing wherein said precursor comprises:
rubber;
a material incorporated into said rubber, said material selected from the group consisting of thermoplastic vulcanizate (TPV), microparticles of TPV, thermoplastic incorporating microparticles of rubber, and any combination thereof; and
at least one cross-linking agent.

2. The use according to claim 1, wherein said rubber is selected from natural rubber (NR), nitrile butadiene rubber (NBR), styrene-butadiene rubber (SBR), polybutadiene (BR), polyacrylate (ACM), ethylene-propylene-diene tripolymer (EPDM), and any combination thereof.

3. The use according to claim 1 or 2, wherein said TPV is a thermoplastic vulcanizate of a rubber selected from polypropylene/EPDM (ppEPDM), polyethylene/EPDM (peEPDM), polyethylene/EPM (peEPM), polyamide/acrylic rubber (paACM), thermoplastc-silicone mixtures, styrene-based thermoplastic vulcanizates, poly(styrene-butadiene-styrene) (SBS), styrene-isoprene-butadiene (SIBS), acrylonitrile butadiene styrene (ABS), styrene-ethylene-butylene-styrene copolymer (SEBS), and styrene/acrylonitrile copolymer (SAN).

4. The use according to any one of claims 1-3, additionally comprising at least one filler.

5. The use according to any one of claims 1-4, wherein the weight ratio of rubber to material selected from thermoplastic vulcanizate (TPV), thermoplastic incorporating microparticles of rubber, and any combination thereof, is between 90:10 and 10:90, or is between 70:30 and 50:50.

6. The use according to any one of claims 1-5, wherein the precursor additionally comprising a cross-linking co-agent.

7. The use according to any one of claim 1-6, wherein the precursor additionally comprising bubbles of pressurized gas.

8. The use according to any one of claims 1-7, wherein said precursor is bonded to a backing surface.

9. The use according to claim 8, wherein said backing surface comprises a material selected from fabric, liner, a compressible layer, polymer film, fiberglass sheet, extruded thermoplastic cylinder, and fiberglass cylinder.

10. A method of producing a precursor for printing, wherein said method comprises:
mixing rubber and a material selected from the group consisting of TPV, microparticles of TPV, thermoplastic incorporating microparticles of rubber, and any combination thereof;
adding at least one cross-linking agent after said mixing step; and
activating said cross-linking agent whereby said rubber and/or said TPV is at least partially cross-linked.

11. The method according to claim 10, wherein said step of mixing takes place within an apparatus selected from mixers, extruders, and mills.

12. The method according to claim 10, wherein said step of mixing comprises mixing at an operating temperature above the melting point of said TPV or thermoplastic, wherein the operating temperature is between 170°C and 220°C.

13. The use according to any one of claims 1-9 wherein said use is in a flexographic plate or sleeve.

14. The use according to claim 1, wherein said printing is performed by a method selected from gravure printing and embossing, dry offset beverage can print processes, and offset printing blankets.

15. A flexographic plate or sleeve using a precursor wherein said precursor comprises:
rubber;
a material incorporated into said rubber, said material selected from the group consisting of thermoplastic vulcanizate (TPV), microparticles of TPV, thermoplastic incorporating microparticles of rubber, and any combination thereof; and
at least one cross-linking agent.

16. The flexographic plate or sleeve of claim 15, wherein the weight ratio of rubber to material selected from thermoplastic vulcanizate (TPV), microparticles of TPV, thermoplastic incorporating microparticles of rubber, and any combination thereof, is between 90:10 and 10:90, or is between 70:30 and 50:50.

## Patentansprüche

1. Verwendung eines Vorläufers für Druckmedien, wobei der Vorläufer Folgendes umfasst:
Kautschuk;
ein in dem Kautschuk aufgenommenes Material, wobei das Material aus der Gruppe bestehend aus einem thermoplastischen Vulkanisat (TPV), Mikropartikeln von TPV, einem Mikropartikel von Kautschuk aufnehmenden Thermoplast und von beliebigen Kombinationen davon ausgewählt ist; und
mindestens ein Vernetzungsagens.

2. Verwendung gemäß Anspruch 1, wobei der Kautschuk von Naturkautschuk (NR), Nitril-Butadien-Kautschuk (NBR), Styrol-Butadien-Kautschuk (SBR), Polybutadien (BR), Polyacrylat (ACM), Ethylen-Propylen-Dien-Kautschuk (EPDM) und Kombinationen davon ausgewählt ist.

3. Verwendung gemäß Anspruch 1 oder 2, wobei das TPV ein thermoplastisches Vulkanisat eines Kautschuks ist, das von Polypropylen/EPDM (ppEPDM), Polyethylen/EPDM (peEPDM), Polyethylen/EPM (peEPM), Polyamid/Acryl-Kautschuk (paACM), Thermoplast-Silikon-Gemischen, thermoplastischen Vulkanisaten auf Styrolbasis, Poly(styrol-butadien-styrol) (SBS), Styrol-Isopren-Butadien (SIBS), Acrylnitril-Butadien-Styrol (ABS), Styrol-Ethylen-Butylen-StyrolCopolymer (SEBS) und Styrol/Acrylnitril-Copolymer (SAN) ausgewählt ist.

4. Verwendung gemäß einem der Ansprüche 1-3, zusätzlich umfassend mindestens einen Füllstoff.

5. Verwendung gemäß einem der Ansprüche 1-4, wobei das Gewichtsverhältnis von Kautschuk zu dem Material, das von thermoplastischem Vulkanisat (TPV), einem Mikropartikel von Kautschuk aufnehmenden Thermoplast oder einer Kombination davon ausgewählt ist, zwischen 90:10 und 10:90 oder zwischen 70:30 und 50:50 liegt.

6. Verwendung gemäß einem der Ansprüche 1-5, wobei der Vorläufer zusätzlich ein Vernetzungs-Coagens umfasst.

7. Verwendung gemäß einem der Ansprüche 1-6, wobei der Vorläufer zusätzlich Blasen eines unter Druck stehenden Gases umfasst.

8. Verwendung gemäß einem der Ansprüche 1-7, wobei der Vorläufer an eine Grundfläche gebunden ist.

9. Verwendung gemäß Anspruch 8, wobei die Grundfläche ein Material umfasst, das von einem Textilmaterial, Auskleidungsmaterial, einer komprimierbaren Schicht, einem Polymerfilm, einer Glasfasermatte, einem extrudierten thermoplastischen Zylinder und einem Glasfaserzylinder ausgewählt ist.

10. Herstellungsverfahren eines Vorläufers für Druckmedien, wobei das Verfahren Folgendes umfasst:
Mischen von Kautschuk mit einem Material, das aus der Gruppe von TPV, Mikropartikeln von TPV, einem Mikropartikel von Kautschuk aufnehmenden Thermoplast und Kombinationen davon ausgewählt ist;
Zusetzen von mindestens einem Vernetzungsagens nach dem Mischschritt; und
Aktivieren des Vernetzungsagens, wodurch der Kautschuk bzw. das TPV mindestens teilweise vernetzt wird.

11. Verfahren gemäß Anspruch 10, wobei der Mischschritt in einer Vorrichtung durchgeführt wird, die von Mischern, Extrudern und Mühlen ausgewählt ist.

12. Verfahren gemäß Anspruch 10, wobei der Mischschritt Mischen bei einer Betriebstemperatur umfasst, die über dem Schmelzpunkt von TPV oder dem Thermoplast liegt, wobei die Betriebstemperatur zwischen 170 °C und 220°C liegt.

13. Verwendung gemäß einem der Ansprüche 1-9, wobei die Verwendung in einer Flexodruckplatte oder -hülse ist.

14. Verwendung gemäß Anspruch 1, wobei das Drucken mittels eines Verfahrens ausgeführt wird, das von Gravurdruck und Prägedruck, wasserlosem Offsetdruck von Getränkedosen und Offset-Drucktüchern ausgewählt ist.

15. Flexodruckplatte oder -hülse, verwendend einen Vorläufer, wobei der Vorläufer Folgendes umfasst:
Kautschuk;
ein in dem Kautschuk aufgenommenes Material, wobei das Material aus der Gruppe bestehend aus einem thermoplastischen Vulkanisat (TPV), Mikropartikeln von TPV, einem Mikropartikel von Kautschuk aufnehmenden Thermoplast und von beliebigen Kombinationen davon ausgewählt ist;
und mindestens ein Vernetzungsagens.

16. Flexodruckplatte oder -hülse gemäß Anspruch 15, wobei das Gewichtsverhältnis von Kautschuk zu dem Material, das von einem thermoplastischen Vulkanisat (TPV), Mikropartikeln von TPV, einem Mikropartikel von Kautschuk aufnehmenden Thermoplast und beliebigen Kombinationen davon ausgewählt ist, zwischen 90:10 und 10:90 oder zwischen 70:30 und 50:50 liegt.

## Revendications

1. Utilisation d'un précurseur d'impression dans lequel ledit précurseur comprend :
un caoutchouc;
un matériau incorporé dans ledit caoutchouc, ledit matériau étant choisi dans le groupe constitué par un vulcanisat thermoplastique (VTP), des microparticules de VTP, des microparticules de thermoplastiques incorporant du caoutchouc et toute combinaison de ceux-ci; et
au moins un agent de réticulation.

2. Utilisation selon la revendication 1, dans laquelle ledit caoutchouc est choisi parmi du caoutchouc naturel (CN), du caoutchouc nitrile-butadiène (NBR), du caoutchouc butadiène-styrène (SBR), du polybutadiène (BR), du polyacrylate (ACM), du caoutchouc éthylène-propylène-diène (EPDM), et toute combinaison de ceux-ci.

3. Utilisation selon la revendication 1 ou 2, dans laquelle ledit VTP est un vulcanisat thermoplastique d'un caoutchouc choisi parmi un polypropylène/EPDM (ppEPDM), un polyéthylène/EPDM (peEPDM), un polyéthylène/EPM (peEPM), un caoutchouc polyamide/acrylique (paACM), des mélanges thermoplastique-silicone, des vulcanisats thermoplastiques à base de styrène, des poly(styrène-butadiène-styrène) (SBS), des styrène-isoprène-butadiène (SIBS), un acrylonitrile butadiène styrène (ABS), un copolymère styrène-éthylène-butylène-styrène (SEBS) et un copolymère styrène/acrylonitrile (SAN).

4. Utilisation selon l'une quelconque des revendications 1 à 3, comprenant en outre au moins un matériau de remplissage.

5. Utilisation selon l'une quelconque des revendications 1 à 4, dans laquelle le rapport pondéral du caoutchouc au matériau choisi parmi un vulcanisat thermoplastique (VTP), un thermoplastique incorporant des microparticules de caoutchouc, et toute combinaison de ceux-ci, est entre 90:10 et 10:90, ou est entre 70:30 et 50:50.

6. Utilisation selon l'une quelconque des revendications 1 à 5, dans laquelle le précurseur comprend en outre un co-agent de réticulation.

7. Utilisation selon l'une quelconque des revendications 1 à 6, dans laquelle le précurseur comprend en outre des bulles de gaz sous pression.

8. Utilisation selon l'une quelconque des revendications 1 à 7, dans laquelle ledit précurseur est lié à une surface de support.

9. Utilisation selon la revendication 8, dans laquelle ladite surface de support comprend un matériau choisi parmi un tissu, un revêtement, une couche compressible, un film de polymère, une feuille de fibre de verre, un cylindre thermoplastique extrudé et un cylindre en fibre de verre.

10. Procédé de production d'un précurseur d'impression, dans lequel ledit procédé comprend :
le mélange de caoutchouc et d'un matériau choisi dans le groupe constitué par du VTP, des microparticules de VTP, des thermoplastiques incorporant des microparticules de caoutchouc et toute combinaison de ceux-ci;
l'ajout d'au moins un agent de réticulation après ladite étape de mélange; et
l'activation dudit agent de réticulation, par laquelle ledit caoutchouc et/ou ledit VTP sont au moins partiellement réticulés.

11. Procédé selon la revendication 10, dans lequel ladite étape de mélange a lieu à l'intérieur d'un appareil choisi parmi des mélangeurs, des extrudeuses et des broyeurs.

12. Procédé selon la revendication 10, dans lequel ladite étape de mélange comprend le mélange à une température de fonctionnement supérieure au point de fusion dudit VTP ou thermoplastique, dans lequel la température de fonctionnement est comprise entre 170 °C et 220 °C.

13. Utilisation selon l'une quelconque des revendications 1 à 9, dans laquelle ladite utilisation se fait dans une plaque ou un manchon de flexographie.

14. Utilisation selon la revendication 1, dans laquelle ladite impression est effectuée par un procédé choisi parmi l'impression par héliogravure et par gaufrage, des procédés d'impression offset à sec de cannettes de boisson et des blanchets d'impression offset.

15. Plaque ou manchon flexographique utilise un précurseur dans lequel ledit précurseur comprend:
un caoutchouc;
un matériau incorporé dans ledit caoutchouc, ledit matériau étant choisi dans le groupe constitué par le vulcanisat thermoplastique (VTP), des microparticules de VTP, des thermoplastiques incorporant des microparticules de caoutchouc et toute combinaison de ceux-ci; et
au moins un agent de réticulation.

16. Plaque ou manchon flexographique selon la revendication 15, dans lequel le rapport pondéral du caoutchouc au matériau choisi parmi le vulcanisat thermoplastique (VTP), les microparticules de VTP, les microparticules thermoplastiques incorporant des caoutchoucs et toute combinaison de ceux-ci est compris entre 90:10 et 10: 90, ou entre 70:30 et 50:50.
